(19) **·Europäisches Patentamt**
**European Patent Office**
**Office européen des brevets**

(11) Veröffentlichungsnummer : **0 195 060**
**B1**

(12) # EUROPÄISCHE PATENTSCHRIFT

(45) Veröffentlichungstag der Patentschrift :
**13.04.88**

(51) Int. Cl.⁴ : **F 16 D 55/224**

(21) Anmeldenummer : **85904812.6**

(22) Anmeldetag : **24.09.85**

(86) Internationale Anmeldenummer :
**PCT/EP 85/00493**

(87) Internationale Veröffentlichungsnummer :
**WO/8601865 (27.03.86 Gazette 86/07)**

(54) **TEILBELAG-SCHEIBENBREMSE FÜR FAHRZEUGE.**

(30) Priorität : **24.09.84 DE 8428099 U**

(43) Veröffentlichungstag der Anmeldung :
**24.09.86 Patentblatt 86/39**

(45) Bekanntmachung des Hinweises auf die Patenterteilung : **13.04.88 Patentblatt 88/15**

(84) Benannte Vertragsstaaten :
**DE FR GB IT**

(56) Entgegenhaltungen :
**FR-A- 2 232 701**
**FR-A- 2 488 962**
**GB-A- 2 033 988**
**GB-A- 2 060 093**
**GB-A- 2 072 775**
**US-A- 4 350 229**

(73) Patentinhaber : **LUCAS INDUSTRIES public limited**
**company**
**Great King Street**
**Birmingham, B19 2XF West Midlands (GB)**

(72) Erfinder : **HEIBEL, Helmut**
**Wiesenstrasse 1**
**D-5431 Moschheim (DE)**

(74) Vertreter : **Wuesthoff, Franz, Dr.-Ing. et al**
**Patentanwälte Wuesthoff -v. Pechmann-Behrens-**
**Goetz Schweigerstrasse 2**
**D-8000 München 90 (DE)**

**Beschreibung**

Die Erfindung betrifft eine Teilbelag-Scheibenbremse für Fahrzeuge mit

- einem Bremsträger, der den Rand einer Bremsscheibe umgreift,
- einem Paar Bremsbacken, die auf je einer Seite der Bremsscheibe angeordnet und am Bremsträger geführt sind,
- einer Betätigungsvorrichtung mit einer Betätigungsachse, die zusammen mit der Bremsscheibenachse eine radiale Mittelebene definiert,
- einem Paar Führungsbolzen, die am Bremsträger mindestens annähernd parallel zur Bremsscheibenachse auf der Seite der Mittelebene angeordnet sind, die, bezogen auf die Drehrichtung der Bremsscheibe bei Vorwärtsfahrt, die Ablaufseite ist,
- einem Sattel, der mittels der Führungsbolzen verschiebbar geführt ist, wobei
- die Betätigungsvorrichtung unmittelbar auf die eine Bremsbacke, und über den Sattel auf die andere Bremsbacke, einwirkt und der Bremsträger beim Bremsen aus Vorwärtsfahrt wirksame Führungsflächen für die Bremsbacken nur auf der Ablaufseite aufweist, während der Sattel beim Bremsen aus Rückwärtsfahrt wirksame Stützflächen für die Bremsbacken aufweist.

Bei Teilbelag-Scheibenbremsen dieser Gattung werden die beim Bremsen aus Vorwärtsfahrt auf die Bremsbacken einwirkenden Umfangskräfte über die genannten Führungsflächen unmittelbar auf den Bremsträger übertragen.

Bei einer bekannten gattungsgemäßen Bremse (EP-A 011 94 66) stützen sich die beiden Bremsbacken beim Bremsen aus Rückwärtsfahrt mit je einem Vorsprung an den Stützflächen des Sattels ab und zugleich mit je einer Schulter an einer Führungsfläche des Bremsträgers. Die dabei vom Sattel aufgenommenen Umfangskräfte werden über die Führungsbolzen auf den Bremsträger übertragen.

Diese Umfangskräfte üben auf den Sattel ein Moment aus, das ebenfalls über die Führungsbolzen auf den Bremsträger übertragen werden muß. Dieses Moment ist bestrebt, den Sattel um eine zur Bremsscheibenachse und zur Betätigungsachse normale Achse zu kippen und kann zu einer Biegeverformung der beiden Führungsbolzen führen, wenn beim Bremsen aus Rückwärtsfahrt besonders große Umfangskräfte auftreten. Infolge einer solchen Verformung der Führungsbolzen kann die Verschiebbarkeit des Sattels beeinträchtigt werden.

Der Erfindung liegt die Aufgabe zugrunde, eine Teilbelag-Scheibenbremse so weiterzubilden, daß kräftige Bremsungen auch bei Rückwärtsfahrt möglich sind, ohne daß die Verschiebbarkeit des Sattels beeinträchtigt wird.

Die Aufgabe ist bei einer Teilbelag-Scheibenbremse der eingangs beschriebenen Gattung erfindungsgemäß dadurch gelöst, daß Bremsträger und Sattel an der der Bremsbetätigungsvorrichtung gegenüberliegenden Seite durch eine zusätzliche Gleitpaarung miteinander verbunden sind, die bei Bremsung aus Rückwärtsfahrt wirksam ist und dabei die Führungsbolzen von Momenten des Sattels bezüglich einer zur Bremsscheibenachse und zur Betätigungsachse normalen Achse mindestens teilweise entlastet.

Damit wird erreicht, daß ein Teil der bei Bremsung aus Rückwärtsfahrt auftretenden Umfangskräfte, vor allem aber deren Momente bezüglich der letztgenannten Achse, vom Sattel über die zusätzliche Gleitpaarung auf den Bremsträger übertragen werden. Infolgedessen können keine die Verschiebbarkeit des Sattels beeinträchtigenden Verformungen der Führungsbolzen auftreten. Selbst wenn beim Bremsen aus Rückwärtsfahrt außerordentlich große Umfangskräfte auftreten sollten, entfällt die Gefahr, daß die Führungsbolzen bleibend verformt werden oder gar aus ihren Befestigungsstellen ausreißen.

Die zusätzliche Gleitpaarung kann in besonders einfacher Weise von einem Bolzen und einer Bohrung gebildet sein. Der Bolzen ist dabei zur Übertragung von Umfangskräften und Momenten fest mit einem der beiden Bauteile, Bremsträger oder Sattel verbunden, und die Gleitpaarung ergibt sich dadurch, daß ein Abschnitt des Bolzens in eine an dem anderen Bauteil ausgebildete Bohrung eingreift.

Damit Verschmutzung und Korrosion die Verschiebbarkeit des Sattels nicht erschweren, andererseits aber die zusätzliche Gleitpaarung beim Bremsen aus Rückwärtsfahrt wirksam wird, ehe die Führungsbolzen in störender Weise mit Momenten belastet werden, hat es sich als zweckmäßig erwiesen, den Bolzen mit allseitigem Spiel in der zugehörigen Bohrung, jedoch exzentrisch in Vorwärtsdrehrichtung der Bremsscheibe nach vorne gegen die Bohrung versetzt, anzuordnen.

Es ist ferner zweckmäßig, die zusätzliche Gleitpaarung so anzuordnen, daß ein Punkt der zusätzlichen Gleitpaarung einen Scheitel eines Dreiecks bildet, dessen von diesem Scheitel ausgehende Schenkel durch je einen Endpunkt eines Bereichs verlaufen, in dem je einer der beiden Führungsbolzen geführt ist, und der dritte Schenkel dieses Dreiecks durch einen Anfangspunkt je eines dieser beiden Bereiche verläuft, wobei die Wirkungslinien der beim Bremsen auf die beiden Bremsbacken einwirkenden resultierenden Umfangskräfte die Ebene dieses Dreiecks innerhalb von dessen Schenkeln durchstoßen.

Ein Ausführungsbeispiel der Erfindung wird im folgenden anhand schematischer Zeichnungen mit weiteren Einzelheiten erläutert. Es zeigt:

Fig.1 eine Ansicht der fahrzeugäußeren Seite einer Teilbelag- Scheibenbremse,
Fig.2 die zugehörige Draufsicht,

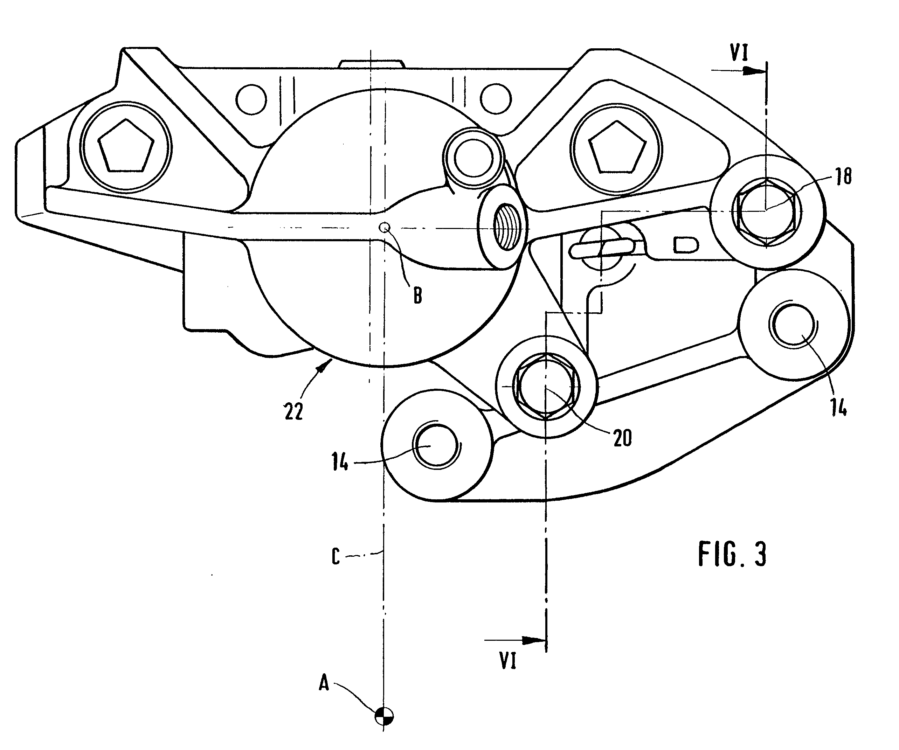

Fig.3 eine Ansicht der fahrzeuginneren Seite der Bremse,

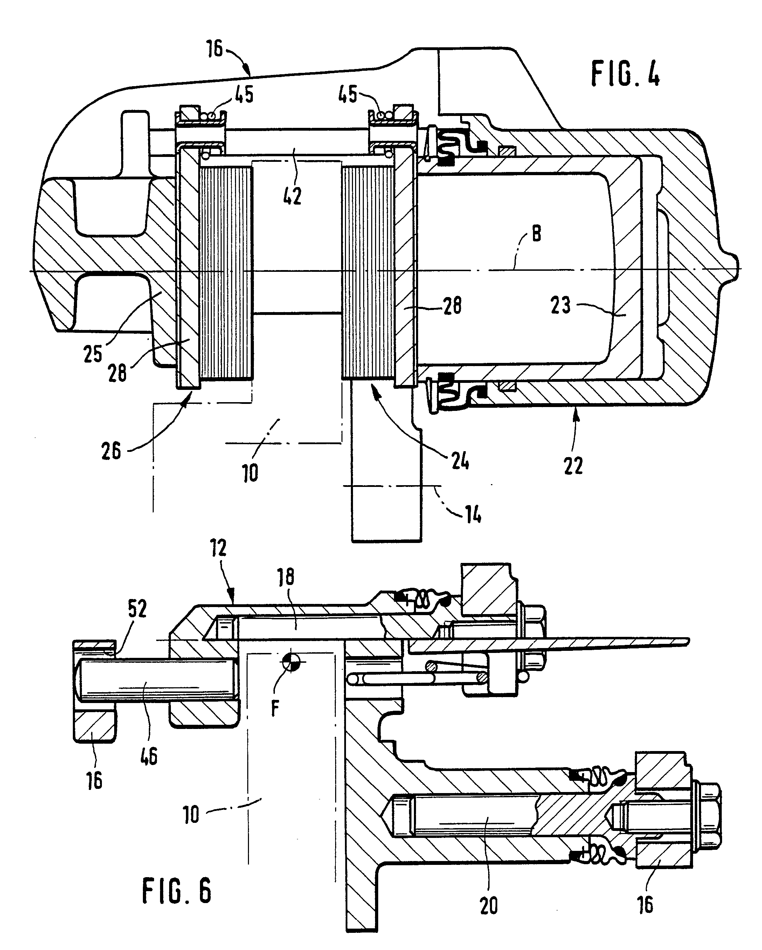

Fig. 4 und 5 die Schnitte IV-IV und V-V in Fig. 1
Fig. 6 den Schnitt VI-VI in Fig. 3.
Der dargestellten Bremse ist eine Bremsscheibe 10 zugeordnet, von der Teile, insbesondere ihres äußeren Randes, und die Bremsscheibenachse A mit strichpunktierten Linien angedeutet sind. Zur Bremse gehört ein Bremsträger 12, der den Rand der Bremsscheibe 10 umgreift und zwei Gewindelöcher 14 zur Befestigung an einem Bauteil eines Fahrzeugs, z. B. an einem Achsschenkel aufweist. Über den äußeren Rand der Bremsscheibe 10 greift ein Sattel 16, der am Bremsträger 12 parallel zur Bremsscheibenachse A verschiebbar geführt ist, wie im folgenden beschrieben wird.

An der in bezug auf das Fahrzeug inneren Seite des Sattels 16 ist ein radial äußerer, zur Bremsscheibenachse A paralleler Hauptführungsbolzen 18 befestigt. Ein am Hauptführungsbolzen 18 ausgebildeter Zapfen steckt in einer am Sattel 16 ausgebildeten Durchgangsbohrung. An einer Seite der Durchgangsbohrung liegt ein an Hauptführungsbolzen 18 ausgebildeter Ansatz an und an der anderen Seite der Kopf einer in den Zapfen eingeschraubten Schraube. Der Hauptführungsbolzen 18 ist im wesentlichen spielfrei in einer am Bremsträger 12 ausgebildeten ersten Führungsbohrung 19 parallel zur Bremsscheibenachse A verschiebbar geführt. Die Führungsbohrung 19 ist in üblicher Weise mit einer Manschette gegen den Hauptführungsbolzen 18 abgedichtet.

Parallel zum Hauptführungsbolzen 18 ist, radial weiter innen, ein Nebenführungsbolzen 20 angeordnet, der ähnlich wie der Hauptführungsbolzen 18 mit dem Sattel 16 verbunden ist. Der Nebenführungsbolzen 20 ist in einer zweiten Führungsbohrung 21 des Bremsträgers 12 geführt und ebenfalls mit einer Manschette gegen diese Führungsbohrung abgedichtet. Herstellungsbedingte Abstandstoleranzen zwischen den beiden Führungsbolzen 18 und 20 werden über ein Spiel des Zapfens des Nebenführungsbolzens 20 in der zugehörigen Durchgangsbohrung des Sattels 16 ausgeglichen.

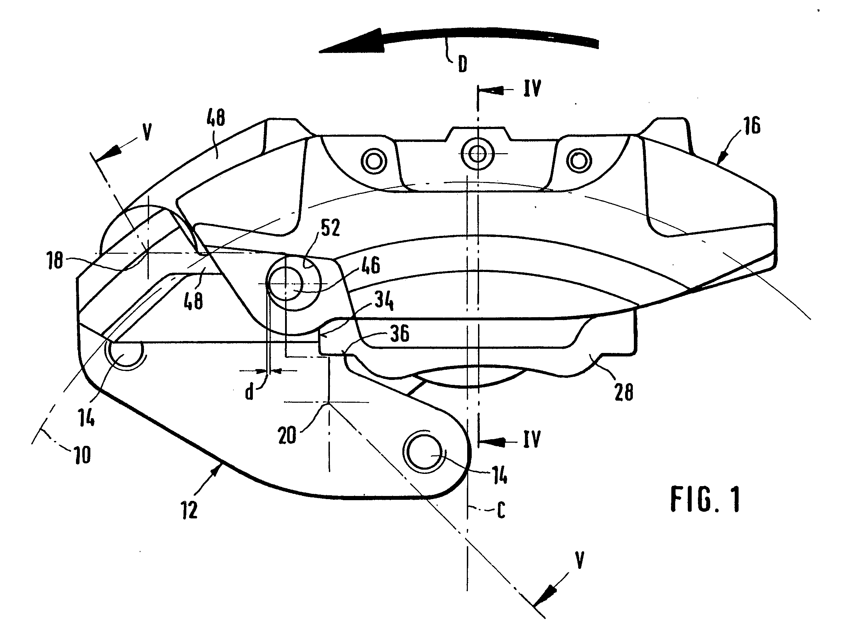

Der Sattel 16 weist an seiner in bezug auf das Fahrzeug inneren Seite eine hydraulische Betätigungsvorrichtung 22 auf, deren Achse sich parallel zur Bremsscheibenachse A erstreckt und im folgenden als Betätigungsachse B bezeichnet wird. Die gemeinsame Ebene der beiden Achsen A und B wird im folgenden als Mittelebene C bezeichnet. Die Drehrichtung der Bremsscheibe 10 bei Vorwärtsfahrt des zugehörigen Fahrzeugs ist in Fig.1 mit einem Pfeil D angedeutet. Diejenige Seite der Bremse und jedes ihrer Bauteile, die von einem beliebigen Punkt der vorwärtsdrehenden Bremsscheibe 10 zuerst erreicht wird, ist die Auflaufseite ; die andere, von der Auflaufseite aus jenseits der Mittelebene C gelegene Seite ist die Ablaufseite.

Mit den vorstehenden Definitionen läßt sich feststellen, daß der Bremsträger 12 ausschließlich auf der Ablaufseite der Bremse angeordnet ist und dort erst in einem erheblichen Abstand von der Mittelebene C beginnt. Dementsprechend sind auch die Führungsbolzen 18 und 20 beide an der Ablaufseite der Bremse angeordnet. Der Hauptführungsbolzen 18 liegt nur geringfügig radial außerhalb einer Ebene, welche die Betätigungsachse B enthält und sich im rechten Winkel zur Mittelebene C erstreckt. Der Nebenführungsbolzen 20 ist nahe der Mitte zwischen Hauptführungsbolzen 18 und Bremsscheibenachse A angeordnet.

Die Betätigungsvorrichtung 22 hat einen Kolben 23, mit dem sich eine in bezug auf das Fahrzeug innere Bremsbacke 24 unmittelbar betätigen, d. h. an eine Seite der Bremsscheibe 10 anpressen läßt. Der Sattel 16 weist an der anderen Seite der Bremsscheibe 10 einen zu dieser parallelen Schenkel 25 auf, mit der sich eine in bezug auf das Fahrzeug äußere Bremsbacke 26 mittelbar, d. h. durch axiale Verschiebung des Sattels 16, betätigen läßt.

Die Bremsbacken 24 und 26 weisen wie üblich je eine Rückenplatte 28 und einen Bremsbelag 30 auf. An der Ablaufseite hat der Bremsträger 12 beiderseits der Bremsscheibe 10 je eine zur Mittelebene C parallele, ihr zugewandte Führungsfläche 34 und je eine dazu senkrechte Führungsfläche 36 für die Rückenplatte 28 jeder der beiden Bremsbacken 24, 26.

An der Auflaufseite des Sattels 16 ist eine zur Mittelebene C parallele, ihr zugewandte Stützfläche 40 für die Rückenplatte 28 der fahrzeuginneren Bremsbacke 24 ausgebildet, die teilweise radial außerhalb der Bremsscheibe 10 angeordnet ist, sich aber auch radial innerhalb von deren Außenrand erstreckt. In entsprechender Weise ist der Rückenplatte 28 der fahrzeugäußeren Bremsbacke 26 eine Stützfläche 41 des Sattels 16 zugeordnet, die jedoch ausschließlich radial außerhalb des Außenrandes der Bremsscheibe 10 angeordnet ist.

Parallel zur Betätigungsachse B erstrecken sich durch Löcher in den Rückenplatten 28 der Bremsbacken 24, 26 Haltestifte 42, 44 hindurch, deren Enden am Sattel 16 befestigt sind. An der Rückenplatte 28 jeder der beiden Bremsbacken 24, 26 ist eine Niederhaltefeder 45 gelagert, die sich an den beiden Haltestiften 42, 44 abstützt.

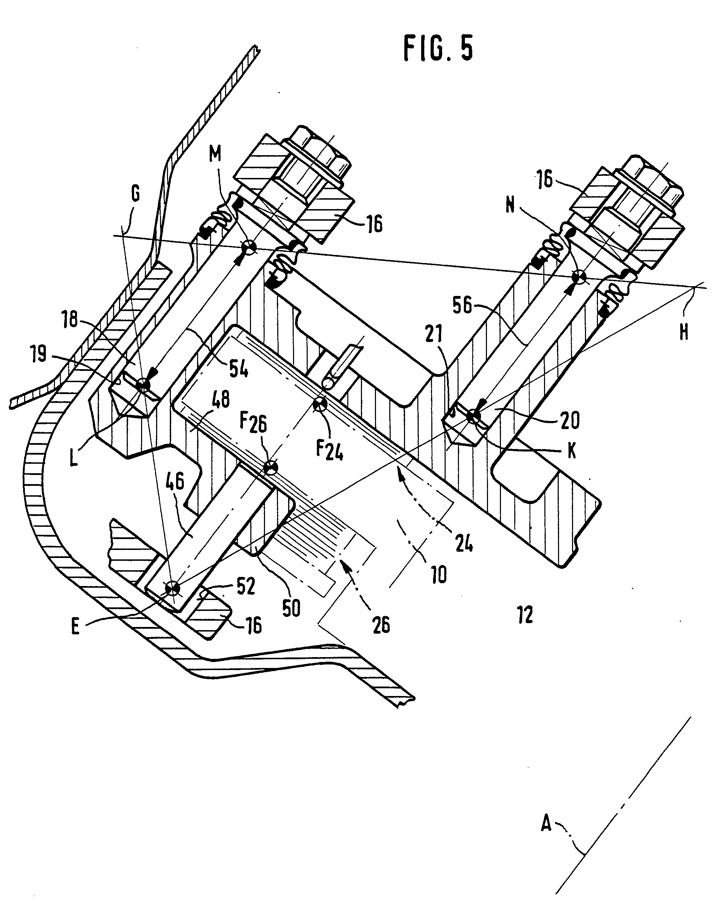

Bei Bremsung aus Vorwärtsfahrt werden auf die Bremsbacken 24 und 26 einwirkende Umfangskräfte $F_{24}$, $F_{26}$ (Fig. 5) alleine von den Führungsflächen 34 am Bremsträger 12 aufgenommen.

Bei Bremsung aus Rückwärtsfahrt stützen sich die beiden Bremsbacken 24 und 26 dagegen an der zugehörigen Stützfläche 40 bzw. 41 des Sattels 16 ab. Die Wirkungslinie der an der fahrzeuginneren Bremsbacke 24 angreifenden Umfangskraft verläuft durch die Stützfläche 40, so daß kein auf die Bremsbacke 24 wirkendes Moment entstehen kann. Die Stützfläche 41 hingegen liegt radial außerhalb der Wirkungslinie der auf die Bremsbacke 26 wirkenden Umfangskraft, so daß ein auf diese Bremsbacke 26 wirkendes Moment entsteht. Dieses Moment ist an der zur Mittelebene C normalen Führungsfläche 36 des Bremsträgers 12 abgestützt.

Die bei kräftigem Bremsen aus Rückwärtsfahrt vom Sattel 16 aufgenommene resultierende Umfangskraft F (Fig. 6) wird teilweise über einen Bolzen 46 auf einen Arm 48 an der von der Betätigungsvorrichtung 22 abgelegenen Seite des Bremsträgers 12 übertragen. Der Bolzen 46 ist mit einem Ende in einen verstärkten Ansatz 50 des Arms 48 eingepreßt und erstreckt sich mit normalerweise allseitigem radialen Abstand, jedoch exzentrisch, durch eine Bohrung 52 im Sattel 16. Der Bolzen 46 hat von einem ablaufseitigen Wandbereich der Bohrung 52, den er während des Bremsens aus Rückwärtsfahrt abzustützen hat, einen kleinen Abstand d. Die beim Bremsen aus Rückwärtsfahrt über die Bremsbacken 24, 26 in den Sattel 16 eingeleitete resultierende Umfangskraft F wird auf den Bremsträger 12 zunächst alleine über die Führungsbolzen 18, 20 übertragen, bis geringfügige, noch unschädliche elastische Verformungen dazu führen, daß der Bolzen 46 den Abstand d überwindet und über die Wand der Bohrung 52 den Sattel 16 gegen Momente abstützt, die bestrebt sind, ihn um eine zur Bremsscheibenachse A und zur Betätigungsachse B normale Achse zu kippen. Die Führungsbolzen 18 und 20 bleiben demzufolge im wesentlichen unverformt. Die Verschiebbarkeit des Sattels 16 auf den Führungsbolzen 18, 20 ist deshalb auch dann gewährleistet, wenn bei einer Bremsung aus Rückwärtsfahrt außergewöhnlich große Umfangskräfte auftreten.

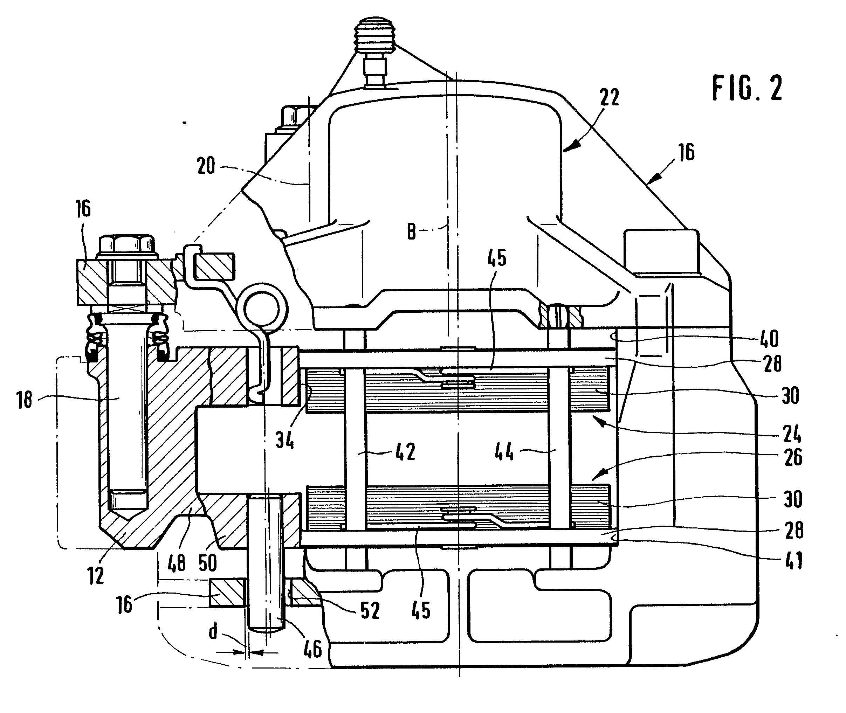

Um das vom Ansatz 50 des Arms 48 aufzunehmende Moment geringzuhalten, ist der Arm 48, wie vor allem in Fig.2 gezeigt, nahe an der Bohrung 52 angeordnet. Vor allem aber ist der Bolzen 46 gemäß Fig.5 so angeordnet, daß ein Punkt E, in dem er an der Wand der Bohrung 52 gleitend anliegt, einen Scheitel eines Dreiecks EGH bildet. Ein Schenkel EG dieses Dreiecks verläuft durch einen Punkt L, der ein Ende des Bereichs 54 kennzeichnet, in dem der Hauptführungsbolzen 16 in der Führungsbohrung 19 geführt ist. Ein zweiter Schenkel EH verläuft durch den Endpunkt K des Bereichs 56, in dem der Führungsbolzen 20 in der Führungsbohrung 21 geführt ist. Die genannten Bereiche 54 und 56 sind in Fig. 5 durch Pfeile gekennzeichnet. Die Anfangspunkte M und N dieser Bereiche 54, 56 liegen auf einem dritten Schenkel GH des genannten Dreiecks.

Die Wirkungslinien der beim Bremsen aus Rückwärtsfahrt entstehenden Umfangskräfte $-F_{24}$ und $-F_{26}$ und somit auch ihrer Resultierenden F durchstoßen die Ebene des Dreiecks EGH innerhalb von dessen Schenkeln EG, EH, GH; diese Umfangskräfte haben daher in bezug auf die Abstützungen des Sattels 16 kleine Hebelarme und sind nicht bestrebt, den Sattel 16 zu kippen.

Die gegenüber der Achse der Bohrung 52 exzentrische, in Vorwärtsdrehrichtung D nach vorne versetzte Anordnung des Bolzens 46 ist derart, daß der Abstand d zwischen dem Bolzen 46 und dem am nächsten liegenden Wandbereich der Bohrung 52 etwa 0,3 bis 0,7 mm beträgt. Damit ist sichergestellt, daß der Bolzen 46 sich auch bei Verschmutzung oder Korrosion nicht in der Bohrung 50 festsetzen kann. Die Verschiebbarkeit des Sattels 16 beim Bremsen aus Vorwärtsfahrt ist durch den Bolzen 46 somit nicht beeinträchtigt. Die beschriebene Anordnung des am Arm 48 befestigten Bolzens 46 bedarf zur Übertragung von Kräften und Momenten keines großen zusätzlichen Materialaufwandes und führt deshalb zu keiner nennenswerten Gewichtserhöhung der Bremse. Der Bremsträger 12 ist mit seinem Arm 48 zur Aufnahme der auftretenden Kräfte und Momente so dimensioniert, daß er aus einem in einfacher und wirtschaftlicher Weise bearbeitbaren Werkstoff, wie z. B. Grauguß, herstellbar ist.

**Patentansprüche**

1. Teilbelag-Scheibenbremse für Fahrzeuge mit
- einem Bremsträger (12), der den Rand einer Bremsscheibe (10) umgreift,
- einem Paar Bremsbacken (24, 26), die auf je einer Seite der Bremsscheibe (10) angeordnet und am Bremsträger (12) geführt sind,
- einer Betätigungsvorrichtung (22) mit einer Betätigungsachse (B), die zusammen mit der Bremsscheibenachse (A) eine radiale Mittelebene (C) definiert,
- einem Paar Führungsbolzen (18, 20), die am Bremsträger (12) mindestens annähernd parallel zur Bremsscheibenachse (A) auf der Seite der Mittelebene (C) angeordnet sind, die, bezogen auf die Drehrichtung (D) der Bremsscheibe (10) bei Vorwärtsfahrt, die Ablaufseite ist,
- einem Sattel (16), der mittels der Führungsbolzen (18, 20) verschiebbar geführt ist, wobei
- die Betätigungsvorrichtung (22) unmittelbar auf die eine Bremsbacke (24) und über den Sattel (16) auf die andere Bremsbacke (26), einwirkt und der Bremsträger (12) beim Bremsen aus Vorwärtsfahrt wirksame Führungsflächen (34, 36) für die Bremsbacken (24, 26) nur auf der Ablaufseite aufweist, während der Sattel (16) beim Bremsen aus Rückwärtsfahrt wirksame Stützflächen (40, 41) für die Bremsbacken (24, 26) aufweist, dadurch gekennzeichnet, daß Bremsträger (12) und Sattel (16) an der der Bremsbetätigungsvorrichtung (22) gegenüberliegenden Seite durch eine zusätzliche Gleitpaarung (46, 52) miteinander verbunden sind, die bei Bremsung aus Rückwärtsfahrt wirksam ist und dabei die Führungsbolzen (18, 20) von Momenten des Sattels (16) bezüglich einer zur Bremsscheibenachse (A) und zur Betätigungsachse (B) normalen Achse mindestens teilweise entlastet.

2. Teilbelag-Scheibenbremse nach Anspruch 1, dadurch gekennzeichnet, daß die zusätzliche Gleitpaarung von einem Bolzen (46) und einer Bohrung (52) gebildet ist.

3. Teilbelag-Scheibenbremse nach Anspruch 2, dadurch gekennzeichnet, daß der Bolzen (46) an einem Arm (48) des Bremsträgers (12) auf der von der Betätigungsvorrichtung (22) abgelegenen Seite der Bremsscheibe (10) befestigt ist.

4. Teilbelag-Scheibenbremse nach Anspruch 2 oder 3, dadurch gekennzeichnet, daß die Mittelachse des Bolzens (46) in Vorwärtsdrehrichtung (D) der Bremsscheibe (10) gegenüber der Mittelachse der Bohrung (52) nach vorne versetzt angeordnet ist.

5. Teilbelag-Scheibenbremse nach einem der Ansprüche 1 bis 4, dadurch gekennzeichnet, daß ein Punkt (E) der zusätzlichen Gleitpaarung (46, 52) einen Scheitel eines Dreiecks (EGH) bildet, dessen von diesem Scheitel ausgehende Schenkel (EG, EH) durch einen Endpunkt (K bzw. L) je eines Bereichs (54, 56) in dem je einer der beiden Führungsbolzen (18, 20) geführt ist, und der dritte Schenkel (GH) dieses Dreiecks (EGH) durch einen Anfangspunkt (M bzw. N) je eines dieser beiden Bereiche (54, 56) verläuft, und daß die Wirkungslinien der beim Bremsen auf die beiden Bremsbacken (24, 26) einwirkenden resultierenden Umfangskräfte ($F_{24}$, $F_{26}$) die Ebene dieses Dreiecks (EGH) innerhalb von dessen Schenkeln (EG, EH, GH) durchstoßen.

## Claims

1. A spot-type disc brake for vehicles, comprising
- a brake carrier (12) which straddles the edge of a brake disc (10),
- a pair of brake pads (24, 26) each arranged at one side of the brake disc (10) and guided at the brake carrier (12),
- an actuator (22) having an actuating axis (B) defining a radial center plane (C) together with the axis (A) of the brake disc,
- a pair of guide bolts (18, 20) arranged at the brake carrier (12) at least approximately parallel to the axis (A) of the brake disc at that side of the center plane (C) which is the trailing side based on the direction of rotation (D) of the brake disc (10) during forward travelling,
- a caliper (16) guided for displacement by the guide bolts (18, 20),
- the actuator (22) acting directly on the one brake pad (24) and by way of the caliper (16) on the other brake pad (26) and the brake carrier (12) comprising effective guide faces (34, 36) for the brake pads (24, 26) upon braking during forward travelling at the trailing side only, while the caliper (16) comprises support faces (40, 41) for the brake pads (24, 26) effective upon braking during backward travelling, characterized in that the brake carrier (12) and the caliper (16) are interconnected by an additional sliding couple (46, 52) at the side opposite the brake actuator (22) and effective upon braking during backward travelling to relieve the guide bolts (18, 20) at least in part of moments of the caliper (16) in respect of an axis which is normal to the axis (A) of the brake disc and the actuating axis (B).

2. The spot-type disc brake as claimed in claim 1, characterized in that the additional sliding couple is formed by a bolt (46) and a bore (52).

3. The spot-type disc brake as claimed in claim 2, characterized in that the bolt (46) is fastened at an arm (48) of the brake carrier (12) at the side of the brake disc (10) remote from the actuator (22).

4. The spot-type disc brake as claimed in claim 2 or 3, characterized in that the central axis of the bolt (46) is disposed offset forwardly with respect to the central axis of the bore (52), based on the direction of forward rotation (D) of the brake disc (10).

5. The spot-type disc brake as claimed in one of claims 1 to 4, characterized in that a point (E) of the additional sliding couple (46, 52) constitutes an apex of a triangle (EGH) the legs (EG, EH) of which, starting from this apex, pass through an end point (K and L, respectively) of an area (54, 56) in which the two guide bolts (18, 20) are guided respectively, and the third leg (GH) of this triangle (EGH) passes through a starting point (M and N, respectively) of each these two areas (54, 56), and in that the lines of action of the resulting peripheral forces ($F_{24}$, $F_{26}$) acting on the two brake pads (24, 26) upon braking penetrate the plane of the triangle (EGH) within the legs (EG, EH, GH) thereof.

## Revendications

1. Frein à disque à garniture partielle pour véhicules, comportant :
- un support de frein (12) qui chevauche le bord d'un disque de frein (10),
- une paire de mâchoires de frein (24, 26), qui sont disposées de part et d'autre du disque de frein (10) et qui sont guidées sur le support de frein (12),
- un dispositif d'actionnement (22) comportant un axe d'actionnement (B) qui définit en coopération avec l'axe (A) du disque de frein un plan médian radial (C),
- une paire de broches de guidage (18, 20), qui sont disposées sur le support de frein (12) au moins approximativement parallèlement à l'axe (A) du disque de frein sur le côté du plan médian (C) qui, par rapport au sens de rotation (D) du disque de frein (10) en marche avant, est le côté de sortie,
- un étrier (16), qui est guidé en translation au moyen des broches de guidage (18, 20), où
- le dispositif d'actionnement (22) agit directement sur une des mâchoires de frein (24) et, par l'intermédiaire de l'étrier (16), sur l'autre mâchoire de frein (26) tandis que le support de frein (12) comporte seulement sur le côté de sortie, pour les mâchoires de frein (24, 26), des surfaces de guidage (34, 36) agissant lors d'un freinage en marche avant et que l'étrier (16) comporte pour les mâchoires de frein (24, 26) des surfaces d'appui (40, 41) agissant lors d'un freinage en marche arrière, caractérisé en ce que le support de frein (12) et l'étrier (16) sont reliés entre eux, sur le côté opposé au dispositif d'actionnement de frein (22), par un accouplement glissant additionnel (46, 52), qui entre en action lors d'un freinage en marche arrière et qui soulage ainsi les broches de guidage (18, 20), au moins partiellement, du moment de l'étrier (16) par rapport à un axe perpendiculaire à l'axe (A) du disque de frein et à l'axe d'actionnement (B).

2. Frein à disque à garniture partielle selon la revendication 1, caractérisé en ce que l'accouplement additionnel est constitué par une broche (46) et un alésage (52).

3. Frein à disque à garniture partielle selon la revendication 2, caractérisé en ce que la broche (46) est fixée sur un bras (48) du support de frein (12), sur le côté du disque de frein (10) qui est opposé au dispositif d'actionnement (22).

4. Frein à disque à garniture partielle selon la revendication 2 ou 3, caractérisé en ce que l'axe central de la broche (46) est disposé avec décalage vers l'avant dans le sens de rotation vers l'avant (D) du disque de frein (10) par rapport à l'axe central de l'alésage (52).

5. Frein à disque à garniture partielle selon une des revendications 1 à 4, caractérisé en ce qu'un point (E) de l'accouplement glissant additionnel (46, 52) constitue un sommet d'un triangle (EGH), dont les côtés (EG, EH) partant de ce sommet passent par un point final (K ou L) d'une zone respective (54, 56) dans laquelle l'une, respective, des deux broches de guidage (18, 20) est guidée tandis que le troisième côté (GH) de ce triangle (EGH) passe par un point initial (M ou N) de chacune de ces deux zones (54, 56) et en ce que les lignes d'action des forces circonférentielles résultantes ($F_{24}$, $F_{26}$), agissant lors d'un freinage sur les deux mâchoires de frein (24, 26), coupent le plan de ce triangle (EGH) à l'intérieur de ses côtés (EG, EH, GH).

FIG. 1

FIG. 2

0 195 060

FIG. 3

FIG. 4

FIG. 6

## FIG. 5